# EUROPEAN PATENT APPLICATION

(11) **EP 3 193 056 A1**
(43) Date of publication of application: **19.07.2017**
(21) Application number: 16151418.7
(22) Date of filing: 15.01.2016
(51) Int. Cl.: F16K 31/60, F24D 19/10

(54) **VALVE ARRANGEMENT**

(71) Applicant: Danfoss A/S, 6430 Nordborg (DK)
(72) Inventor: Clausen, Anders Østergaard, 8680 Ry (DK)
(74) Representative: Knoblauch, Andreas

(57) **Abstract**

A valve arrangement (1) is disclosed comprising a heat exchanger valve (2) and an actuator (3), said valve (2) comprising a housing (4) and a valve element (11), said actuator (3) being fixed to said housing (4), acting on said valve element (11), and comprising a rotary handle (16), wherein a set-point of said valve arrangement (1) is adjustable by a rotation of said handle (16) in a predetermined angular area.

Such a valve arrangement should facilitate servicing of a heat exchanger connected to such a valve arrangement.

To this end said handle (16) is rotatable beyond a border of said angular range, wherein said valve (2) is completely shut-off upon a rotation beyond said border.

## Description

The present invention relates to a valve arrangement comprising a valve, in particular a heat exchanger valve, and an actuator, said valve comprising a housing and a valve element, said actuator being fixed to said housing, acting on said valve element, and comprising a handle, wherein a set-point of said valve arrangement is adjustable by a movement of said handle in a predetermined adjustment range.

Such a valve arrangement is used, for example, to control a temperature in a room heated or cooled by a heat exchanger. The heat exchanger can be, for example, a radiator, to which the actuator is fixed. The set-point is adjusted by turning the handle. The actuator adjusts the position of the valve element in the housing and consequently the flow resistance of the valve. In this way it is possible to adjust the flow of a heat carrying fluid, for example hot water, so that the desired temperature in the room is reached.

In some cases it is necessary to perform a service at the heat exchanger or a system connected to the valve arrangement. To this end it is an absolute requirement that the flow of a fluid, e.g. heat carrying fluid through the valve is completely interrupted. If this is not possible, the whole heating or cooling system must be emptied, since it is usually not possible to use such a valve arrangement to shut-off the flow of the fluid. Even if the valve element is brought into contact with a valve seat, this is usually not enough to reliably interrupt the flow, since in some systems, in particular in high flow systems, an overpressure can occur moving the valve element away from the valve seat with the consequence that the valve is opened. Most actuators have a safety spring or another safety device allowing the opening of the valve in case of an overpressure.

The object underlying the invention is to facilitate servicing of a system, in particular a heat exchanger, connected to such a valve.

This object is solved with a valve arrangement as described at the outset in that said handle is moveable out of said adjustment range, wherein said valve is completely shut-off upon a movement out of said range.

The handle can be used as usual to adjust the set-point of the valve. To this end there is a predetermined moving range. When the handle is moved out of this moving range, it can be used to shut-off the valve. There are a number of possibilities to move the handle out of the adjustment range. When the handle is rotated, the set-point of the valve arrangement is adjusted as usual. For example, a set-point temperature of 18 to 25° C can be chosen by rotating the handle in a range of 240°. However, when the handle is rotated beyond a border of this angular range, there is no further adjustment of the set-point temperature, but a shut-off of the valve is performed. In such a state the valve cannot be opened by an internal overpressure. Another possibility is to use another moving direction of the handle. When the handle is rotated to adjust the set-point of the valve, it can be moved along the axis of rotation to shut-off the valves. To this end it is possible to press the handle into a position where it locks mechanically, for example with some kind of a snap connection. Such a snap connection could be released again by pressing once more. When the handle is rotated to shut-off the valve, the rotational bearing is usually able to block an opening movement in the valve. If a linear movement of the handle is used, a snap connection (or any other connection) could block an opening movement. However, if the movement of the handle out of the adjustment range shuts-off the valve and the elements performing the shut-off of the valve are clamped together or fixed together in any other way, no further blocking is necessary.

Preferably said adjustment range is an angular range having a lower border for a lower set-point and a higher border for a higher set-point, wherein said valve is completely shut-off upon a rotation beyond one of said borders, in particular said lower border. If the lower border is used, such a construction helps a service person to remember in which direction the handle has to be turned to completely shut-off the valve. When the lower set-point is chosen, the flow through the valve is throttled. A further rotation of the handle allows the complete closure of the valve.

Preferably said actuator is inseparately connected to said valve. The valve and the actuator form a common unit which cannot simply be demounted.

In a preferred embodiment said valve element cooperates with a valve seat, wherein said valve seat is at a hollow cylinder and said valve element is moveable into said hollow cylinder to set-off said valve. The valve seat can e.g. be formed by a front face of said hollow cylinder. During normal control the valve element is moved towards and away from the valve seat thereby controlling the flow of the heat carrying fluid. When it is required to completely interrupt the flow of fluid, the valve element is moved into the valve seat to completely block the free flow area through the hollow cylinder. Preferably said hollow cylinder is part of an insert arranged within said housing and separating a first port of said housing and a second port of said housing. This allows for a precise adaption of the hollow cylinder and of the valve element relative to each other without having expensive machining of the housing.

Preferably said insert is positioned in an opening of said housing, said opening has an axis perpendicular to an axis of at least one of said first port and said second port. When both ports have a common axis, the axis of the opening is perpendicular to this common axis. When the first port and the second port are angled with respect to each other, the axis of the opening is perpendicular to the axis of one of the two ports.

Preferably said valve element carries a sealing ring which seals against an inner wall of said hollow cylinder when said valve element is inside said hollow cylinder. Such a sealing element improves the tightness of the construction.

Preferably said actuator comprises a thermostatic element within said handle, said thermostatic element acting on said valve element via a stem, wherein upon rotation of said handle said thermostatic element is moved in a direction parallel to said stem. The movement of the thermostatic element, for example a wax element, changes the set-point temperature.

Preferably said stem or a prolongation of said stem is inserted into said thermostatic element. The thermostatic element can be a bellows element so that the stem or a prolongation thereof is guided.

In a preferred embodiment an auxiliary element is positioned between a bottom wall of said thermostatic element and said valve element, said auxiliary element being actuated by said bottom wall upon rotation of said handle beyond said border. When the thermostatic element is moved in a direction towards the housing of the valve beyond the position of the lowest set-point, the bottom wall of the thermostatic element acts on the valve element via the auxiliary element. This makes it possible to produce a force necessary to press the valve element into the hollow cylinder forming the valve seat. Furthermore, when the valve element is actuated by the bottom of the thermostatic element and the thermostatic element is held in its position by the handle, an overpressure within the valve cannot produce enough forces to press the valve element out of the hollow cylinder.

In a preferred embodiment a stuffing box is arranged in said auxiliary element and said stem is guided through said stuffing box. The stuffing box provides for a sealing the inside the housing against the outside in a region in which the actuator is mounted.

Furthermore, it is preferred that said auxiliary element is sealed against said insert. In this way there are two sealing zones sealing the interior of the housing completely against the outside.

Preferably said auxiliary element comprises a ring shaped protrusion surrounding said stem and acting on said valve element. When the auxiliary element acts on the valve element, the forces are distributed over a greater surface of the valve element. In this way it is possible to use rather high forces without having the risk to damage the valve element.

In a preferred embodiment said bottom wall comprises a ring-shaped step and a contact area in which said auxiliary element comes in contact with said bottom wall is arranged in a region of said step. The step stiffens out the bottom wall of the thermostatic element and increases a resistance against deformation. A zone having an increased resistance against deformation is used to act on the auxiliary element. The auxiliary element has a ring-shaped wall so that the stepped region of the bottom wall can be placed outside the center of the bottom wall.

Preferably said valve element and/or said auxiliary element are made from a plastic material. At least one of these elements can be produced by injection molding allowing for a high precision of production and low costs.

A preferred embodiment of the invention will now be described in more detail with reference to the drawing, wherein:
- Fig. 1: is a schematic sectional view of a valve arrangement in open condition and
- Fig. 2: is a view corresponding to Fig. 1 in closed condition of the valve.

A valve arrangement 1 comprises a valve 2 and an actuator 3. Valve 2 and actuator 3 are fixedly connected to each other, i.e. they cannot be separated from each other without destroying one of them.

The valve 2 comprises a housing 4 having a first port 5 and a second port 6. In the present embodiment the first port 5 is used as inlet and the second port 6 is used as outlet.

Housing 4 comprises an opening 7 having an axis which is perpendicular to the axis of the first port 5 and of the second port 6. If the two ports 5, 6 are angled with respect to each other, for example by an angle of 90°, the axis of the opening 7 is perpendicular to the axis of one of the two ports 5, 6.

An insert 8 is mounted in housing 4 through opening 7. Insert 8 separates the first port 5 and the second port 6 from each other.

Insert 8 carries a valve seat 9. Valve seat 9 is located on a front face of a hollow cylinder 10.

Valve 2 furthermore comprises a valve element 11 which is loaded by a spring 12 in a direction away from valve seat 9. Spring 12 is supported by a base wall 13 of insert 8. The spring 12 is positioned within a spring chamber 14. The insert 8 comprises a number of openings connecting the first port 5 with the spring chamber 14 (not shown). The valve element 11 is guided by said insert 8.

The actuator 3 is a thermostatic actuator. It comprises a thermostatic element 15 and a rotary handle 16. The rotary handle 16 is in threaded connection with a base 17 of the actuator. The base 17 is fixedly connected to housing 4.

When the rotary handle 16 is rotated relative to base 17 and relative to the valve 2, it changes the actual position relative to valve 2 because of the threaded connection.

Valve element 11 is connected to a stem 18 which is inserted into a bellows 19 of the thermostatic element 15. The stem 18 can have a prolongation 20 resting against an end 21 of the bellows. The force of the spring 12 presses valve element 11 away from the valve seat 9 and consequently presses the thermostatic element 15 via stem 18 against a front face wall 22 of the rotary handle 16. When the rotary handle 16 is turned, the axial position of the thermostatic element 15 with respect to the valve 2 is changed. This change of position changes a set-point temperature of the actuator 3.

The thermostatic element 15 comprises a bottom wall 23, wherein said bottom wall 23 comprises a step 24 which is ring-shaped. The step 24 stiffens out the bottom wall 23 of the thermostatic element.

An auxiliary element 25 is positioned between said thermostatic element 15 and said valve element 11. The auxiliary element 25 comprises a ring-shaped protrusion 26 surrounding stem 18 and acting on said valve element 11. Furthermore, said auxiliary element 25 comprises a ring-shaped wall 27 surrounding said stem 18. Said ring-shaped wall 27 has the same diameter or approximately the same diameter as step 24.

A stuffing box 28 is located in the auxiliary element 25 and seals the stem 18 to the outside. Furthermore, the auxiliary element comprises a seal 29, for example a sealing ring against the insert 8.

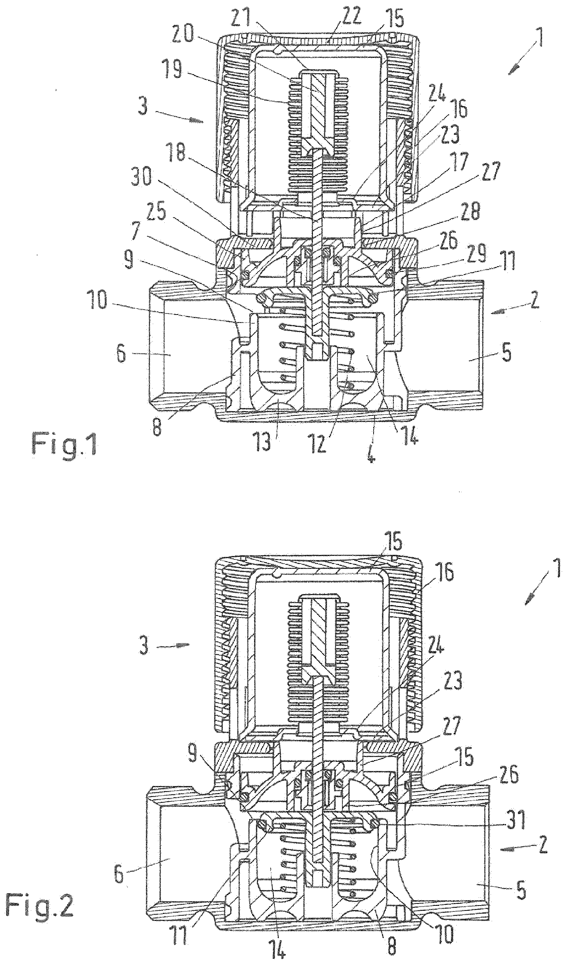

Fig. 1 shows the valve arrangement in a complete opened condition allowing a maximum flow from the first port 5 to the second port 6. In this condition the auxiliary element 25 has been moved against a lid 30 closing opening 7 in which insert 8 is positioned. This movement of the auxiliary element 25 is caused by the force of spring 12.

When the auxiliary element is in the position shown in Fig. 1, there is a certain distance between the ring-shaped wall 27 of the auxiliary element 25 and the bottom wall 23 of the thermostatic element 15. The auxiliary element 25 can be moved over this distance by rotating rotary handle 16 in order to adjust the set-point temperature.

In this case the room temperature is sensed by the thermostatic element 15 which can be filled with wax or with another material expanding upon temperature increase. When the filling expands the valve element 11 is moved towards valve seat 9 in order to control a flow of a heat carrying fluid from the first port 5 to the second port 6.

When the rotary handle 16 is rotated further and the thermostatic element 15 is moved further in a direction towards valve 2 the bottom wall 23 with its step 24 comes in contact with the ring-shaped wall 27 of the auxiliary element 15. Further rotation of the rotary handle 16 causes a movement of the auxiliary element 15 in a direction towards the valve seat 9 since the auxiliary element acts on valve element 11 via the ring-shaped protrusion 26. This movement of the thermostatic element 15 presses the valve element 11 into the hollow cylinder 10. As long as the rotary handle 16 is in this position (shown in Fig. 2) the valve element 11 cannot be pressed out of the hollow cylinder 10 since such a movement is blocked by the rotary handle 16.

Valve element 11 carries a sealing ring 31 sealing between the valve element 11 and the insert 8 thereby interrupting completely a flow of fluid from the first port 5 to the second port 6. Even in case of an overpressure in spring chamber 14 there is no leakage of fluid to the second port 6 since the cooperation between the valve element 11 and the hollow cylinder 10 forms a stable and reliable seal.

The housing 4 can be made of metal. The insert 8 can be made of a plastic material. The same is true for the valve element 11 which can be made from a plastic material as well. Furthermore, the auxiliary element 25 can be made of a plastic material. At least one of these parts 8, 11, 25 can be produced by injection molding.

The valve arrangement can be used to control a flow of a heat carrying fluid through a heat exchanger, for example a radiator, to heat a room. Furthermore, the valve arrangement 1 can be used in an air conditioning system in which a flow of a cooling fluid should be controlled. The valve arrangement 1 can in particular be used in so called high flow systems in which a high volume flow should be controlled.

Instead of using a rotary movement of the handle to shut-off the valve, it is also possible to use a linear movement of the handle 16 in order to shut-off the valve 2. Such a linear or pressing movement of the handle 2 can be transmitted via the auxiliary element 25 to the valve element 11 in order to move the valve element 11 into the hollow cylinder 10. When the handle 16 is fixed in this axial position (not shown) the valve element 11 cannot be pressed out of the hollow cylinder 10 since such a movement is blocked by the blocked handle 16.

Another possibility is to drive the valve element 11 so far into the hollow cylinder 10 that it is not possible for a high pressure to open the valve 2 again. In this solution there is no need for a mechanical lock of the valve element 11. However, it is of advantage to have a possibility to draw the valve element 11 out of the hollow cylinder 10.

## Claims

1. Valve arrangement (1) comprising a valve (2), in particular a heat exchanger valve, and an actuator (3), said valve (2) comprising a housing (4) and a valve element (11), said actuator (3) being fixed to said housing (4), acting on said valve element (11), and comprising a handle (16), wherein a set-point of said valve arrangement (1) is adjustable by a movement of said handle (16) in a predetermined adjustment range, **characterized in that** said handle (16) is moveable out of said adjustment range, wherein said valve (2) is completely shut-off upon a movement out of said range.

2. Valve arrangement according to claim 1, **characterized in that** said adjustment range is an angular range having a lower border for a lower set-point and a higher border for a higher set-point, wherein said valve (2) is completely shut-off upon a rotation beyond one of said borders, in particular said lower border.

3. Valve arrangement according to claim 1 or 2, **characterized in that** said actuator (3) is inseperately connected to said valve (2).

4. Valve arrangement according to any of claims 1 to 3, **characterized in that** said valve element (11) cooperates with a valve seat (9), wherein said valve seat (9) is formed by a front face of a hollow cylinder (10) and said valve element (9) is movable into said hollow cylinder (10) to shut-off said valve (2).

5. Valve arrangement according to claim 4, **characterized in that** said hollow cylinder (10) is part of an insert (8) arranged within said housing (4) and separating a first port (5) of said housing (4) and a second port (6) of said housing (4).

6. Valve arrangement according to claim 5, **characterized in that** said insert (8) is positioned in an opening (7) of said housing (4), said opening (7) having an axis perpendicular to an axis of at least one of said first port (5) and said second port (6).

7. Valve arrangement according to any of claims 4 to 6, **characterized in that** said valve element (11) carries a sealing ring (31) which seals against an inner wall of said hollow cylinder (10) when said valve element (11) is inside said hollow cylinder (10).

8. Valve arrangement according to any of claims 1 to 7, **characterized in that** said actuator (3) comprises a thermostatic element (15) within said handle (16), said thermostatic element (15) acting on said valve element (11) via a stem (18), wherein upon rotation of said handle said thermostatic element (15) is moved in a direction parallel to said stem (18).

9. Valve arrangement according to claim 8, **characterized in that** said stem (18) or a prolongation (20) of said stem is inserted into said thermostatic element (15).

10. Valve arrangement according to claim 8 or 9, **characterized in that** an auxiliary element (25) is positioned between a bottom wall (23) of said thermostatic element (15) and said valve element (11), said auxiliary element (25) being actuated by said bottom wall (23) upon rotation of said handle (16) beyond said border.

11. Valve arrangement according to claim 10, **characterized in that** a stuffing box (28) is arranged in said auxiliary element (25) and said stem (18) is guided through said stuffing box (28).

12. Valve arrangement according to claim 10 or 11, **characterized in that** said auxiliary element (25) is sealed against said insert (8).

13. Valve arrangement according to any of claims 10 to 12, **characterized in that** said auxiliary element (25) comprises a ring shaped protrusion (26) surrounding said stem (18) and acting on said valve element.

14. Valve arrangement according to any of claims 10 to 13, **characterized in that** said bottom wall (23) comprises a ring shaped step (24) and a contact area in which said auxiliary element (25) comes in contact with said bottom wall (23) is arranged in a region of said step (24).

15. Valve arrangement according to any of claims 10 to 14, **characterized in that** said valve element (11) and/or said auxiliary element (25) are made from a plastic material.
